# EUROPÄISCHE PATENTANMELDUNG

(11) **EP 4 650 949 A1**
(43) Veröffentlichungstag der Anmeldung: **19.11.2025**
(21) Anmeldenummer: 25176690.3
(22) Anmeldetag: 15.05.2025
(51) Int. Cl.: G06F 8/65

(54) **SOFTWAREAKTUALISIERUNG FÜR EIN HAUSHALTSGERÄT UND VERFAHREN ZUM AKTUALISIEREN EINER SOFTWARE IN EINEM HAUSHALTSGERÄT**

(30) Priorität: 17.05.2024 DE 102024114000
(71) Anmelder: E.G.O. Elektro-Gerätebau GmbH, 75038 Oberderdingen (DE)
(72) Erfinder: EGENTER, Christian, 75015 Bretten (DE); FUCHS, Etienne, 68789 St. Leon-Rot (DE); KERNWEIN, Markus, 75015 Bretten (DE); WALK, Peter, 76133 Karlsruhe (DE); SCHRODT, Nico, 75057 Kürnbach (DE)
(74) Vertreter: Laqua, Bernd Christian Kurt

(57) **Zusammenfassung**

Die vorliegende Offenbarung betrifft ein Haushaltsgerät (100), das eine neue Version einer Software (350) empfangen kann. Die neue Version der Software wird in einem dedizierten Speicherbereich in dem Haushaltsgerät gespeichert und anschließend wird eine Signatur der neuen Softwareversion geprüft. Bei erfolgreicher Prüfung wird ein Prüfwert in dem Haushaltsgerät gesetzt, der anzeigt, ob die Software gültig und somit ausführbar ist. Ferner wird ein entsprechendes Verfahren zur Aktualisierung einer Software in einem Haushaltsgerät beschrieben.

## Beschreibung

Die vorliegende Offenbarung betrifft ein Haushaltsgerät sowie ein Verfahren zum Aktualisieren einer Software in dem Haushaltsgerät. Insbesondere betrifft die vorliegende Offenbarung ein Haushaltsgerät mit einem dedizierten Speicherbereich zur Speicherung von Steuersoftware, einer Kommunikationseinheit zur Verbindung mit einem Datennetzwerk und einem Steuersystem, das eine neue Version der Software über die Kommunikationseinheit empfängt, in den dedizierten Speicherbereich schreibt und anschließend eine Signaturprüfung der neuen Software durchführt. Ferner betrifft die vorliegende Offenbarung ein Verfahren zur Aktualisierung einer Software in einem Haushaltsgerät, wobei eine Signaturprüfung nach dem Empfangen und Schreiben einer neuen Softwareversion in einen dedizierten Speicher erfolgt.

Übliche Haushaltsgeräte verfügen über Steuermodule, die eingerichtet sind, um bestimmte Komponenten der Haushaltsgeräte zu steuern. Die in den Steuermodulen ausgeführte Software zur Steuerung einer Komponente ist meist in einem nichtzugänglichen Bereich des Haushaltsgeräts gespeichert. Für den Fall einer Softwareaktualisierung muss daher ein Techniker vor Ort (oder nach Einschicken des Geräts zu einem Technikbetrieb) eine neue Version der Software in das entsprechende Steuermodul aufspielen, zum Beispiel mittels Flashen des zugehörigen Speichers des Steuermoduls.

Viele Haushaltsgeräte sind inzwischen mit einem Datenzugriffsmodul ausgestattet, zum Beispiel für einen Internetzugang. Somit könnte eine neue Softwareversion auch über das Internet auf das Haushaltsgerät gespielt werden. Dies birgt jedoch zum einen Sicherheitsrisiken, da Unbefugte auf das Haushaltsgerät und auch die Steuermodule zugreifen könnten. Zum anderen muss das Haushaltsgerät mit einem Speicher ausgestattet sein, der ein Herunterladen der neuen Software ermöglicht, bevor der zugehörige Speicher des Speichermoduls damit geflasht werden kann. Das Vorsehen von Speicher, der nur für den Aktualisierungsvorgang benötigt wird, erhöht jedoch die Herstellungskosten des Haushaltsgeräts.

Es ist daher die Aufgabe der vorliegenden Offenbarung, ein Haushaltsgerät und ein Verfahren zur Softwareaktualisierung bereitzustellen, welche eine sichere Softwareaktualisierung bei geringen Herstellungskosten ermöglichen.

Diese Aufgabe wird durch die vorliegende Erfindung, wie sie in den unabhängigen Ansprüchen definiert ist, gelöst. Bevorzugte Ausführungsformen sind in den abhängigen Ansprüchen definiert.

Gemäß einem ersten Aspekt wird ein Haushaltsgerät bereitgestellt. Das Haushaltsgerät umfasst ein Steuersystem, das dazu eingerichtet ist, eine Komponente des Haushaltsgeräts zu steuern, einen Speicher, der einen dedizierten Speicherbereich zur Speicherung von Software, die von dem Steuersystem ausführbar ist, umfasst, und eine Kommunikationseinheit, die dazu eingerichtet ist, das Haushaltsgerät mit einem Datennetzwerk zu verbinden. Das Haushaltsgerät verfügt somit über einen Zugang zu einem Datennetzwerk, wie beispielsweise einem LAN, einem WAN, dem Internet, etc., worüber Daten empfangen und gesendet werden können.

Das Steuersystem ist ferner dazu eingerichtet, eine neue Version der Software von der Kommunikationseinheit zu empfangen, die empfangene Software in den dedizierten Speicherbereich zu schreiben, eine Signatur der empfangenen Software unter Verwendung eines öffentlichen Schlüssels zu prüfen, und einen Prüfwert in dem Steuersystem zu setzen, der anzeigt, ob die Prüfung der Signatur erfolgreich ist oder nicht.

Das Haushaltsgerät ist somit in der Lage, eine Softwareaktualisierung durchzuführen, ohne dass zusätzlicher Speicher notwendig ist, um die neue Version der Software zunächst herunterzuladen und deren Signatur zu prüfen, bevor die Software in den dedizierten Speicher geflasht wird (d. h. der dedizierte Speicherbereich überschrieben wird). Vielmehr kann das Steuersystem die empfangene neue Softwareversion direkt in den dedizierten Speicherbereich schreiben. Mit anderen Worten wird eine Verschwendung von Speicherplatz vermieden, in dem die neue Softwareversion zunächst zwischengespeichert werden müsste, um anschließend die alte Software in dem dedizierten Speicherbereich zu ersetzen. Der Speicherbedarf des Haushaltsgeräts kann deshalb hinsichtlich dieser Software halbiert werden.

Durch die Kommunikationseinheit ist es ferner möglich, die neue Softwareversion in das Haushaltsgeräte zu spielen, ohne dass ein Techniker vor Ort sein muss, und ohne dass das Haushaltsgerät zu einem Technikbetrieb eingeschickt werden muss. Mit anderen Worten kann das Software-Update "Over the Air" erfolgen. Zum Beispiel kann die neue Softwareversion aus einem Heimnetzwerk oder über das Internet direkt in das Haushaltsgerät eingespielt werden. Selbstverständlich kann die Kommunikationseinheit auch drahtgebunden mit einem Speichergerät (z.B. einem USB-Stick) verbunden werden, von dem die neue Softwareversion empfangen wird. Auf diese Weise wäre ein Aktualisieren der Software durch einen Techniker vor Ort ebenfalls möglich.

Ferner umfasst das Steuersystem eine Steuereinheit und einen Gatekeeper (oder "Türhüterkomponente"), wobei die Steuereinheit dazu eingerichtet ist, das Schreiben der empfangenen Software in den dedizierten Speicherbereich durchzuführen. Der Gatekeeper kann dabei dazu eingerichtet sein, die neue Version der Software von der Kommunikationseinheit zu empfangen und an die Steuereinheit zu übertragen, und das Prüfen der Signatur unter Verwendung des öffentlichen Schlüssels durchzuführen. Das Schreiben der empfangenen Software kann beispielsweise unter Zuhilfenahme einer der Steuereinheit zugehörigen Bootloadereinheit vorgenommen werden.

Das Steuersystem ist somit in zwei Einheiten (Gatekeeper und Steuereinheit) unterteilt, wobei der Gatekeeper der Steuereinheit (im Datenfluss hinsichtlich der empfangenen neuen Softwareversion) vorangestellt ist. Der Gatekeeper kann beispielsweise mit der Kommunikationseinheit verbunden sein, um von dort die neue Version der Software zu empfangen, während die Steuereinheit nur mit dem Gatekeeper verbunden ist.

In einer Implementierungsvariante kann das Steuersystem ferner dazu eingerichtet sein, vor oder während des Empfangens der neuen Software den dedizierten Speicherbereich zu löschen. Beispielsweise kann zu Beginn einer Softwareaktualisierung der dedizierte Speicherbereich gelöscht werden, um für das Speichern der neuen Softwareversion bereit zu sein. Das Löschen des dedizierten Speicherbereichs kann beispielsweise unter Zuhilfenahme einer Bootloadereinheit des Steuersystems vorgenommen werden.

Alternativ kann der dedizierte Speicherbereich während des Empfangens der neuen Software gelöscht werden. Dies kann beispielsweise blockweise erfolgen, um z.B. ein Datenpaket der neuen Softwareversion in einem oder mehreren Blöcken des Speichers abzulegen.

Selbstverständlich kann das Steuersystem den dedizierten Speicherbereich einfach mit der neuen Software überschreiben. Ein getrennt davon stattfindendes Löschen des dedizierten Speicherbereichs wäre dabei nicht notwendig.

In einer Implementierungsvariante kann der Gatekeeper neben dem Empfangen der neuen Version der Software auch das Schreiben der empfangenen Software in den dedizierten Speicherbereich durchführen. Somit könnte eine Steuereinheit in ihrem üblichen/originären Funktionsumfang unverändert belassen werden, während zur Umsetzung der vorliegenden Offenbarung nur der Gatekeeper in dem Haushaltsgerät implementiert werden muss.

In einer Implementierungsvariante kann der dedizierte Speicherbereich in einem Speicher liegen, auf den die Steuereinheit zugreift, um die darin gespeicherte Software auszuführen. So kann es sich bei der Software zum Beispiel um Steuersoftware für eine von der Steuereinheit zu steuernde Komponente des Haushaltsgeräts handeln.

In einer Implementierungsvariante kann es sich bei der Steuereinheit um einen eingebetteten Mikrocontroller ("Embedded Microcontroller") mit einer Bootloadereinheit handeln. Insbesondere kann es sich um einen Mikrocontroller für eine oder mehrere Komponenten des Haushaltsgeräts handeln. Durch den Gatekeeper könnte der Bootloader einfacher aufgebaut sein (oder in seinem üblichen/originären Funktionsumfang unverändert belassen werden), da die Funktionalität für die Softwareaktualisierung durch den Gatekeeper erfolgt und nicht auf dem eingebetteten Mikrocontroller implementiert sein muss. Bei einem Bootloader handelt es sich um eine Einheit, die selbst nicht aktualisiert werden kann, also in dem Haushaltsgerät jederzeit unverändert bleibt. Beispielsweise kann der Bootloader für den Start des Steuersystems (oder der Steuereinheit) verantwortlich sein.

In einer Implementierungsvariante kann die neue Version der Software in Form einer Mehrzahl von Datenpaketen empfangen werden. Hierbei kann der Gatekeeper ferner dazu eingerichtet sein, einen Hash-Wert der empfangenen Software kontinuierlich nach dem Empfangen jedes Datenpakets zu berechnen. Beispielsweise kann ein Hash-Wert jedes einzelnen Datenpakets berechnet werden. Alternativ kann ein Hash-Wert der gesamten Software auf Basis jedes einzelnen Datenpakets berechnet werden, so dass der Hash-Wert für die gesamte Software nach dem Empfangen des letzten Datenpakets ermittelt werden kann.

Ferner kann der Gatekeeper dazu eingerichtet sein, das Prüfen der Signatur kontinuierlich nach dem Empfangen jedes Datenpakets oder nach dem Empfangen aller Datenpakete durchzuführen. Entsprechend der Berechnung des Hash-Werts kann somit auch das Prüfen der Signatur auf Basis jedes einzelnen Datenpakets erfolgen oder erst nach dem Empfangen aller Datenpakete, also über die gesamte neue Softwareversion.

In einer Implementierungsvariante kann der Gatekeeper ferner dazu eingerichtet sein, den Prüfwert zu setzen. Insbesondere wenn der Gatekeeper das Prüfen der Signatur durchführt, kann entsprechend dem Prüfungsergebnis der Prüfwert gesetzt werden.

In einer Implementierungsvariante kann der Gatekeeper ferner dazu eingerichtet sein, mit einer Mehrzahl von Steuereinheiten zu kommunizieren, wobei jede Steuereinheit einer bestimmten Komponente des Haushaltsgeräts zugeordnet ist.

Dabei kann der Gatekeeper eine neue Softwareversion in einen dedizierten Speicherbereich zugehörig zu der jeweiligen Steuereinheit schreiben oder an die jeweilige Steuereinheit übertragen. Ebenfalls kann der Gatekeeper einen der jeweiligen Steuereinheit zugeordneten Prüfwert setzen, je nachdem, ob für die entsprechende neue Softwareversion die Prüfung der Signatur erfolgreich war oder nicht.

In einer Implementierungsvariante kann der Gatekeeper mit der Kommunikationseinheit eine Einheit (oder "zusammengehörige Einzelkomponente") bilden. Zum Beispiel kann der Gatekeeper zwar einen eigenständigen Prozessor umfassen, aber zusammen mit der Kommunikationseinheit eine zusammengehörige (einzige) Komponente bilden (sozusagen als "Baugruppe").

In einer Implementierungsvariante kann der Gatekeeper über eine Datenübertragungsleitung an die Steuereinheit (oder die Steuereinheiten) angebunden sein, die (datenübertragungstechnisch) separiert ist von der Verbindung des Gatekeeper zu dem Datennetzwerk. Beispielsweise kann der Gatekeeper mit der Steuereinheit über einen internen Bus verbunden sein, der keine direkte (datenübertragungstechnische) Verbindung zur datennetzwerkzugewandten Seite der Kommunikationseinheit aufweist. Der interne Bus kann somit helfen, eine Trennung zwischen internen Komponenten des Haushaltsgeräts und dem Datennetzwerk zu erzielen und somit eine Separierung zwischen dem sicheren Bereich (interne Komponenten) und dem potentiell unsicheren Bereich (Datennetzwerk) bewirken.

In einer Implementierungsvariante kann die Steuereinheit mit der Komponente des Haushaltsgeräts über den internen Bus verbunden sein. Dabei kann es sich um denselben Bus wie zwischen dem Gatekeeper und der Steuereinheit handeln. Selbstverständlich können auch separate Busse in dem Haushaltsgerät zur Kommunikation zwischen Gatekeeper und Steuereinheit bzw. zwischen Steuereinheit und Komponente implementiert sein.

In einer Implementierungsvariante kann die Kommunikationseinheit dazu eingerichtet sein, das Steuersystem von dem Datennetzwerk zu trennen. Mit anderen Worten kann die Kommunikationseinheit selbst (als eigenständige Komponente) für die datenübertragungstechnische Separierung zwischen dem sicheren und dem unsicheren Bereich sorgen. Diese Trennung kann sowohl durch Software implementiert sein (beispielsweise durch Zuhilfenahme einer Firewall-Software, getrennten Datenübertragungsprotokollen, etc.), als auch durch Hardware (beispielsweise durch getrennte physikalische Baueinheiten und Datenübertragungswege). Insbesondere kann die Kommunikationseinheit dazu eingerichtet sein, einen Zugriff von dem Datennetzwerk auf eine andere Baueinheit in dem Haushaltsgerät, wie zum Beispiel dem Steuersystem, Gatekeeper, Steuereinheit, Komponente, etc. zu verhindern.

In einer Implementierungsvariante kann der Gatekeeper mit einer Komponente des Haushaltsgeräts eine Einheit ("zusammengehörige Einzelkomponente") bilden, welche sich auf der internen Seite der Trennung befindet. Mit anderen Worten kann der Gatekeeper mit irgendeiner Komponente des Haushaltsgeräts eine Einheit bilden, die von einer öffentlichen Datenkommunikation der Kommunikationseinheit getrennt ist.

In einer Implementierungsvariante kann der öffentliche Schlüssel in dem Speicher, dem Steuersystem, dem Gatekeeper, der Steuereinheit und/oder der Komponente gespeichert sein. Je nachdem, welche Komponente (zum Beispiel Steuersystem oder Gatekeeper) die Prüfung der Signatur der empfangenen Software durchführt, kann diese Komponente auf den öffentlichen Schlüssel direkt zugreifen oder von der den öffentlichen Schlüssel speichernden Komponente abrufen.

Bei dem öffentlichen Schlüssel kann es sich um einen Teil eines Schlüsselpaars handeln, das ferner einen privaten Schlüssel umfasst ("public-private-key pair" bzw. "Public Key-Kryptographie"). Insbesondere kann mit dem privaten Schlüssel eine digitale Signatur einer Datei (oder von anderen Daten) erstellt werden, die mit dem öffentlichen Schlüssel überprüft werden kann. Zum Beispiel kann die Datei (die Daten) oder das Ergebnis einer Verarbeitung der Datei (z.B. ein Hash-Wert) mit dem privaten Schlüssel verschlüsselt werden. Mit dem öffentlichen Schlüssel lassen sich die Datei (die Daten) oder das Verarbeitungsergebnis entschlüsseln, und somit die Integrität der zugrundeliegenden Datei (der Daten) überprüfen.

In einer Implementierungsvariante kann der Prüfwert in einem Speicher(bereich) gesetzt werden, der in dem Speicher, dem Steuersystem, dem Gatekeeper, der Steuereinheit oder der Komponente integriert ist. Lediglich beispielhaft kann der Prüfwert in dem Steuersystem oder der Steuereinheit gesetzt werden, also in einer Komponente, die die Software ausführt. Dabei kann es sich auch um einen Bootloader handeln, der die Software startet oder auch ausführt. Bei dem Prüfwert kann es sich um ein Flag oder eine ähnliche überprüfbare Variable handeln. Selbstverständlich kann der Prüfwert auch in Form eines Bitschalters oder einer ähnlichen Komponente implementiert sein, insbesondere einem nicht-flüchtigen (Bit-) Speicher.

In einer Implementierungsvariante kann das Steuersystem ferner dazu eingerichtet sein, die Software auszuführen, wenn der Prüfwert anzeigt, dass eine gültige Software vorliegt (also dass die Prüfung der Signatur erfolgreich war). Das Steuersystem (oder der Bootloader, die Steuereinheit oder die Komponente selbst) kann während eines Startvorgangs den Zustand des Prüfwerts abrufen. Zeigt er an, dass die Software ungültig ist (die Prüfung der Signatur war nicht erfolgreich), wird der Startvorgang abgebrochen. Andernfalls (der Prüfwert zeigt eine gültige Software an) kann die Software geladen bzw. gestartet werden.

In einer Implementierungsvariante kann es sich bei der Komponente des Haushaltsgeräts um eine Komponente handeln, die eine Aufgabe des Haushaltsgeräts erfüllt. Lediglich beispielhaft kann es sich bei der Komponente um ein Leistungsteil (zum Beispiel Induktionsgenerator, Relais-Board, Umrichter, etc.), Benutzereingabeschnittstelle (zum Beispiel Touchcontrol, Touchscreen, Eingabefeld, etc.), HF-Generator, Motorsteuerung, Stromüberwacher, Sensor(en), Ofenheizung, Dampfgenerator, eine Komponente einer Waschmaschine, Spülmaschine, Kühlschrank und dergleichen, sowie um eine Steuereinheit einer dieser Komponenten handeln. Jede dieser Komponenten führt eine bestimmte Aufgabe in dem Haushaltsgerät aus. Die hierfür vorgesehene Steuerung wird über das Ausführen einer zugehörigen Software implementiert, die, wie beschrieben, aktualisiert werden kann.

In einer Implementierungsvariante kann es sich bei dem Haushaltsgerät um ein Kochfeld (Herd), einen Backofen, einen Dampfgarer, eine Waschmaschine, einen Trockner, eine Spülmaschine, einen Kühlschrank, einen Staubsauger (-roboter), eine Klimaanlage und Ähnliches handeln.

In einer Implementierungsvariante kann das Aktualisieren der Software durch das Haushaltsgerät gestartet werden. Dies kann durch die Kommunikationseinheit oder eine andere Komponente des Haushaltsgeräts initiiert werden. Ferner kann die Kommunikationseinheit eine neue Version der Software aus dem Datennetzwerk abrufen, insbesondere von einem Speicher, Server oder anderen Netzdienst. Hierbei kann das Haushaltsgerät eine aktuelle Versionsnummer (oder anderen Versionskennzeichner) an das Datennetzwerk übermitteln. Der Speicher, Server oder Netzdienst kann dadurch ermitteln, welche Version der Software an das Haushaltsgerät übertragen werden soll. Beispielsweise kann eine neue Software übermittelt werden, die mehrere Aktualisierungen umfasst (Versionssprung). Alternativ kann zunächst eine neue Software der nächsten Versionsstufe übermittelt werden, und anschließend ein erneuter Aktualisierungsprozess ausgeführt werden, bis die aktuellste Softwareversion auf dem Haushaltsgerät installiert ist.

Ferner kann das Haushaltsgerät auch weitere Informationen (neben der Softwareversion) an das Datennetzwerk übermitteln, wie zum Beispiel Version oder Typ des Bootloader, des Steuersystems, des Gatekeeper, einer Anwendung, die auf einer Komponente des Haushaltsgeräts installiert ist, etc.

Gemäß einem zweiten Aspekt ist ein Verfahren zum Aktualisieren einer Steuersoftware für ein Haushaltsgerät mit einem Speicher, der einen dedizierten Speicherbereich zur Speicherung der Steuersoftware umfasst, vorgesehen. Das Verfahren umfasst ein Empfangen einer neuen Version der Steuersoftware, ein Schreiben der empfangenen Steuersoftware in den dedizierten Speicherbereich, ein Prüfen einer Signatur der empfangenen Steuersoftware unter Verwendung eines öffentlichen Schlüssels, und ein Setzen eines Prüfwerts, der anzeigt, ob die Prüfung der Signatur erfolgreich ist oder nicht.

Das Verfahren ermöglicht eine Softwareaktualisierung in den dedizierten Speicherbereich, ohne die neue Softwareversion vorher vollständig herunterladen und zwischenspeichern zu müssen. Der Speicherbedarf wird dadurch deutlich reduziert. Insbesondere muss kein Speicher vorgehalten werden, der nur für eine Softwareaktualisierung benötigt wird und im übrigen Betrieb des Haushaltsgeräts womöglich verwendungslos bleibt. Dadurch können die Kosten des Haushaltsgeräts gesenkt werden.

In einer Implementierungsvariante kann das Empfangen der neuen Version der Steuersoftware auf Basis einer Mehrzahl von Datenpaketen erfolgen. Das Verfahren umfasst dabei ferner ein Berechnen eines Hash-Werts der empfangenen Software kontinuierlich nach einem Empfangen jedes Datenpakets. Dabei kann es sich um einen Hash-Wert jedes einzelnen Datenpakets handeln und/oder um einen die gesamten Daten der Software betreffenden Hash-Wert.

Ferner kann das Prüfen der Signatur entweder kontinuierlich nach dem Empfangen jedes Datenpakets oder nach dem Empfangen aller Datenpakete erfolgen. Dadurch kann die Integrität jedes einzelnen Datenpakets, aber auf jeden Fall der gesamten Software, überprüft werden.

Es versteht sich, dass das Verfahren gemäß dem zweiten Aspekt auch sämtliche weitere verfahrensmäßigen Merkmale umfassen kann, die oben in Bezug auf das Haushaltsgerät gemäß dem ersten Aspekt beschrieben wurden. Auf unnötige Wiederholungen wird an dieser Stelle verzichtet.

Die vorliegende Offenbarung ist nicht auf die Aspekte und Varianten in der hier beschriebenen Form und Reihenfolge beschränkt. Insbesondere ist die Beschreibung der Aspekte und Varianten nicht dahingehend zu verstehen, dass die vorliegende Offenbarung auf bestimmte Gruppierungen von Merkmalen beschränkt ist. Vielmehr umfasst die vorliegende Offenbarung auch Kombinationen der beschriebenen Varianten und Aspekte.

Nachfolgend wird die vorliegende Offenbarung anhand von exemplarischen Ausführungsformen beschrieben, die in den Zeichnungen abgebildet sind, wobei:
- Figur 1: eine schematische Darstellung eines Haushaltsgeräts zeigt;
- Figur 2: eine schematische Darstellung eines Haushaltsgeräts und eines Verfahrens zum Aktualisieren von Software darin zeigt; und
- Figur 3: eine schematische Darstellung eines Steuersystems eines Haushaltsgeräts zeigt.

In der nachfolgenden Beschreibung werden zum Zweck der Erläuterung und nicht der Einschränkung bestimmte Details dargelegt, um ein Verständnis für die vorliegende Offenbarung zu gewinnen. Selbstverständlich kann die vorliegende Offenbarung auch in anderen Varianten implementiert werden, die von den bestimmten Details in den Figuren abweichen.

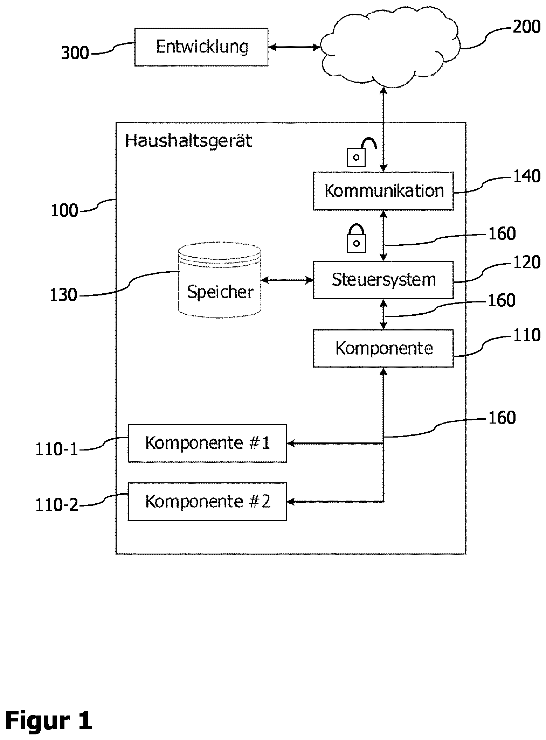

Figur 1 zeigt eine schematische Darstellung eines Haushaltsgeräts 100. Bei dem Haushaltsgerät 100 kann es sich um ein Kochfeld (Herd), einen Backofen, einen Dampfgarer, eine Spülmaschine, eine Waschmaschine, einen Trockner, einen Kühlschrank oder ähnliches Gerät in einem Haushalt handeln. Üblicherweise enthält ein solches Haushaltsgerät 100 mindestens eine Komponente 110. Lediglich als Beispiel könnten bei einem Kochfeld (Herd) die in Figur 1 gezeigten Komponenten 110, 110-1, 110-2 durch ein Eingabefeld (zur Benutzereingabe und Steuerung des Kochfelds), eine oder mehrere Heizspulen oder Induktionsspulen (Hochfrequenzgenerator, HF- Generator), einen Stromüberwacher, Leistungselektronik und dergleichen gegeben sein.

Jede der Komponenten 110 führt eine bestimmte Aufgabe in dem Haushaltsgerät 100 durch, so zum Beispiel das Heizen eines bestimmten Bereichs des Kochfelds oder die Überwachung der dabei fließenden Ströme. Hierfür ist in der Regel eine Steuerung vorgesehen, die in Figur 1 zusammenfassend als Steuersystem 120 dargestellt ist. Selbstverständlich kann das Steuersystem 120 mehrere Einzelkomponenten umfassen. Die jeweilige Komponente 110 kann zum Beispiel durch Ausführen einer zugehörigen Software in dem Steuersystem 120 gesteuert werden. Diese Software kann zum Beispiel in einem Speicher 130 des Haushaltsgeräts 100 gespeichert sein. Obwohl Figur 1 den Speicher 130 getrennt von dem Steuersystem 120 darstellt, kann der Speicher 130 auch in dem Steuersystem 120 selbst integriert sein, oder in Form vieler Speichereinheiten in dem Steuersystem 120 und/oder in den Komponenten 110 integriert sein.

Seit einigen Jahren sind mehr und mehr Haushaltsgeräte 100 auch dazu in der Lage, mit einem Datennetzwerk 200 zu kommunizieren. Das Datennetzwerk 200 kann ein persönliches Netzwerk in einem Haushalt sein, um zum Beispiel das Haushaltsgerät 100 über entsprechende externe Geräte (nicht dargestellt) zu steuern (Smart Home). Das Datennetzwerk 200 kann aber auch Zugriff auf ein Fernnetz (wie zum Beispiel das Internet) haben. Auf jeden Fall weist das Haushaltsgerät 100 hierfür eine Kommunikationseinheit 140 auf, die dazu eingerichtet ist, das Haushaltsgerät 100 mit dem Datennetzwerk 200 zu verbinden und Daten auszutauschen, beispielsweise Daten aus dem Datennetzwerk 200 zu empfangen oder darüber zu senden.

Üblicherweise muss die Kommunikation über das Datennetzwerk 200 als potentiell unsicher betrachtet werden (was in Figur 1 in Form eines offenen Schlosses dargestellt ist). Mit anderen Worten bietet das Datennetzwerk 200 und die Kommunikationseinheit 140 die Möglichkeit, dass Unbefugte auf das Haushaltsgerät 100 zugreifen könnten. Um Schaden an dem Haushaltsgerät 100 durch solchen unbefugten Zugriff zu vermeiden, ist die Kommunikationseinheit 140 dazu eingerichtet, das Steuersystem 120 von dem Datennetzwerk 200 zu trennen. Die Kommunikationseinheit 140 stellt somit eine datenübertragungstechnische Abschirmung nach außen dar. Beispielsweise kann mithilfe von getrennten elektronischen Elementen (zum Beispiel getrennten Prozessoren) die Datenkommunikation mit dem Datennetzwerk 200 auf der einen Seite (nach außen) und eine interne Kommunikation mit dem Steuersystem 120 auf der anderen Seite (nach innen) implementiert werden. Ferner können auch unterschiedliche Kommunikationsmedien (z.B. WLAN auf der externen Seite, ein separates Bussystem auf der internen Seite) vorgesehen sein, um eine physische Trennung zu ermöglichen. Somit kann ein interner Bereich, der durch die Kommunikationseinheit 140 nach außen getrennt ist, ein sicherer Bereich sein (was in Figur 1 in Form eines geschlossenen Schlosses dargestellt ist).

Die Kommunikationseinheit 140 gemäß der vorliegenden Offenbarung ermöglicht es, Software in dem Haushaltsgerät 100 zu aktualisieren. Lediglich schematisch ist in Figur 1 die Durchführung einer Softwareentwicklung 300 dargestellt, die zum Beispiel eine neue Version einer Software, die in dem Haushaltsgerät 100 verwendet wird, bereitstellt.

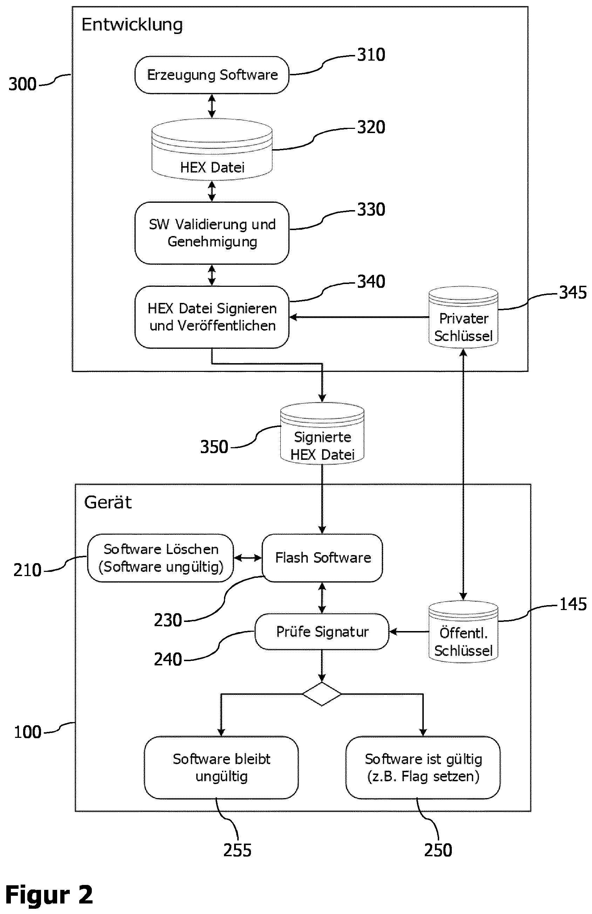

Dies wird anhand der Figur 2 näher erläutert, die eine schematische Darstellung einer Softwareentwicklung 300 und eines Haushaltsgeräts 100, sowie darin ablaufende Verfahrensschritte zur Aktualisierung einer Software in dem Haushaltsgerät 100, zeigt.

In der Softwareentwicklung 300, die beispielsweise bei einem Hersteller des Haushaltsgeräts 100 erfolgen kann, wird zunächst in einem Schritt 310 eine neue Version der Software erzeugt. Anschließend wird in Schritt 320 die erzeugte Software-Datei gespeichert, in Figur 2 beispielhaft als Hexadezimaldatei (HEX) abgekürzt. Selbstverständlich kann die Software in beliebigen Dateiformaten zur Verfügung gestellt werden.

Anschließend wird die Software in Schritt 330 validiert und die Übertragung an verschiedene Haushaltsgeräte 100 genehmigt (freigegeben). Um die Integrität der neuen Software auf Seite des empfangenen Haushaltsgeräts 100 überprüfen zu können, verfügt die Softwareentwicklung 300 über einen privaten Schlüssel 345 eines Schlüsselpaares (Private-Public-Key-Pair), womit die Software-Datei in Schritt 340 signiert wird. Diese Signatur kann durch Berechnen eines Hash-Werts erfolgen, der über die Software-Datei berechnet wird und anschließend mit dem privaten Schlüssel verschlüsselt wird.

Die Software-Datei wird zusammen mit der Signatur, in Figur 2 als "signierte HEX Datei" 350 bezeichnet, veröffentlicht (Schritt 340) und an das Haushaltsgerät 100 übermittelt. Dies kann in jeglicher Datenübertragungsform erfolgen, beispielsweise über das Internet, E-Mail, Verschicken eines USB-Sticks oder anderen Datenträgers, etc. Anschließend wird die signierte Softwaredatei 350 auf Seiten des Haushaltsgeräts 100 empfangen.

Lediglich beispielhaft kann in Schritt 340 die Berechnung des Hash-Werts mittels SHA-2 (Secure Hash Algorithm 2) erfolgen. Selbstverständlich sind auch andere Berechnungsmethoden, wie zum Beispiel SHA-256, SHA-384 oder SHA-512, möglich. Als Verschlüsselungsverfahren kann ein "Elliptic Curve Digital Signature Algorithm" (ECDSA), beispielsweise der Ed25519, mit mindestens 250 Bit eingesetzt werden.

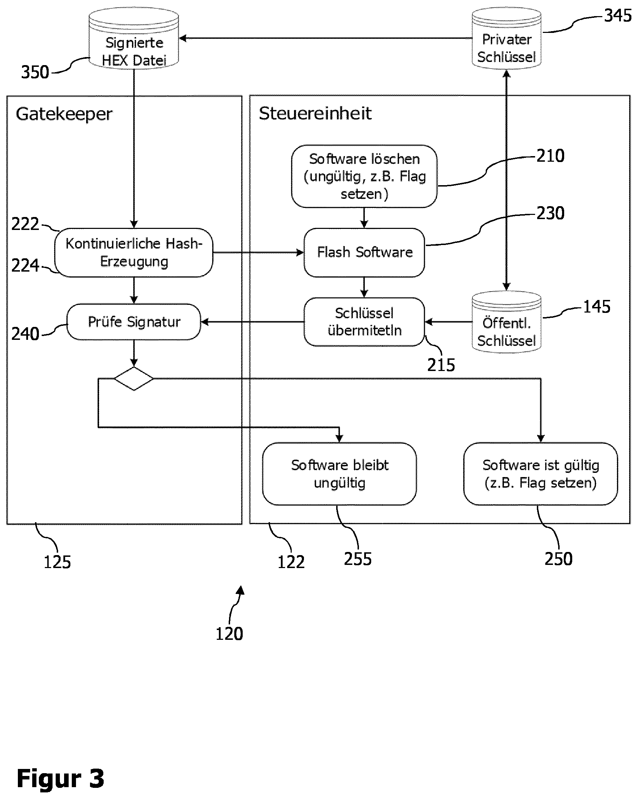

Auf dem Haushaltsgerät 100 wird ein Verfahren zur Aktualisierung der Software durchgeführt, das zunächst allgemein anhand der Figur 2 und anschließend im Detail anhand der Figur 3 erläutert wird.

In dem Haushaltsgerät 100 wird der Softwareaktualisierungsprozess zunächst ausgelöst. In einem darauffolgenden ersten, optionalen, Schritt 210 kann die zu aktualisierende Software gelöscht werden. Hierbei kann der dedizierte Speicherbereich, der die zu aktualisierende Software enthält, gelöscht werden.

Alternativ oder zusätzlich kann in dem Haushaltsgerät 100 ein Prüfwert oder Indikator, zum Beispiel ein Flag, auf ungültig gesetzt werden. Das Steuersystem 120 (oder eine bestimmte Einheit davon, wie zum Beispiel ein Bootloader) kann die Software beispielsweise immer nur dann ausführen/starten, wenn zuvor der Prüfwert (Indikator oder Flag) abgerufen wurde und anzeigt, dass die Software gültig ist. Bei einem auf "ungültig" gesetzten Prüfwert wird die Software somit nicht ausgeführt.

In einem Schritt 230 wird die neue Version der Software 350 in den dedizierten Speicherbereich geschrieben, und in Schritt 240 eine Signatur der Software 350 unter Verwendung eines öffentlichen Schlüssels 145 geprüft. Der öffentliche Schlüssel 145 ist Teil des Schlüsselpaars, zu dem auch der private Schlüssel 345 gehört. Dies ist in Figur 2 durch einen die beiden Schlüssel 145, 345 verbindenden Doppelpfeil gekennzeichnet.. Der private Schlüssel 345 liegt ausschließlich bei der Softwareentwicklung 300 (und nicht im Haushaltsgerät 100) vor. Der öffentliche Schlüssel 145 kann zu einem beliebigen Zeitpunkt in dem Haushaltsgerät 100 abgelegt/gespeichert werden, insbesondere während der Herstellung. Alternativ könnte der öffentliche Schlüssel 145 z.B. auch ad-hoc über das Internet (etwa vom Gerätehersteller) für die konkret anstehende Softwareaktualisierung heruntergeladen werden.

Somit kann der verschlüsselte Hash-Wert, der mit der neuen Software 350 veröffentlicht ist, mittels des öffentlichen Schlüssels 145 entschlüsselt werden, ein Hash-Wert der neuen Software, die nun in dem dedizierten Speicherbereich liegt, berechnet werden und beide Hash-Werte miteinander verglichen werden. Sind beide Hash-Werte identisch, ist die Signaturprüfung erfolgreich und es wird in Schritt 250 der Prüfwert auf gültig gesetzt.

Für den Fall, dass der optionale Schritt 210 nicht durchgeführt wurde, kann in dem Schritt 255 der Indikator (das Flag) auf ungültig gesetzt werden. Somit könnte der Schritt 210 prinzipiell entfallen. Alternativ kann der Schritt 255 auch unabhängig der Durchführung des Schritts 210 immer erfolgen (jedoch abhängig vom Ergebnis der Signaturprüfung).

Figur 3 zeigt eine spezielle Implementierungsvariante des Haushaltsgeräts 100 sowie darin durchgeführte Verfahrensschritte. Elemente und Verfahrensschritte, die bereits in Figur 2 dargestellt und erläutert wurden, sind mit gleichen Bezugszeichen versehen. Um Wiederholungen zu vermeiden, wird auf eine umfassende Beschreibung dieser Elemente und Verfahrensschritte verzichtet. In dieser Implementierungsvariante wird das Steuersystem 120 konkreter dargestellt und umfasst in dieser Variante eine Steuereinheit 122, die dazu eingerichtet ist, mindestens eine Komponente 110 zu steuern, insbesondere durch Ausführen der Software. Ferner umfasst das Steuersystem 120 in der hier dargestellten Implementierungsvariante einen Gatekeeper 125.

Der Gatekeeper 125 kann zwischen der Kommunikationseinheit 140 und der Steuereinheit 122 angesiedelt sein. Einerseits kann der Gatekeeper 125 mit der Kommunikationseinheit 140 eine Baueinheit bilden, wobei der Gatekeeper 125 vorzugsweise in einem getrennten Prozessor (nicht dargestellt) unabhängig von einem Kommunikationseinheitsprozessor implementiert ist. Andererseits kann der Gatekeeper 125 eine eigenständige Einheit oder eigenständige Komponente des Haushaltsgeräts 100 sein, oder ein Bestandteil einer Einheit oder einer anderen Komponente des Haushaltsgeräts 100 sein, welches sich auf der sicheren Seite (Figur 1) der Kommunikationseinheit 140 befindet. Lediglich beispielhaft kann es sich bei der Komponente auf der sicheren Seite um eine Eingabeeinheit (ein Touchcontrol), einen HF-Generator, einen Stromüberwacher, etc. handeln.

Ferner kann der Gatekeeper 125 über ein Bussystem 160 (Figur 1) mit internen Baueinheiten, wie zum Beispiel der Steuereinheit 122 und/oder einer Komponente 110 kommunizieren, wobei das Bussystem 160 eine Trennung von der Kommunikationseinheit 140 bewirkt. Anstatt eines Bussystems 160 könnten auch andere Datenübertragungssysteme verwendet werden, die von der öffentlichen Datenkommunikation der Kommunikationseinheit 140 abgetrennt sind.

Während allgemein, wie in Figur 2 dargestellt, das Steuersystem 120 oder die Steuereinheit 122 die neue Version der Software 350 von der Kommunikationseinheit 140 empfangen kann, wird in der in Figur 3 dargestellten Implementierungsvariante die neue Software 350 von dem Gatekeeper 125 (als Teil des Steuersystems 120) empfangen.

Die Berechnung des Hash-Werts kann somit in Schritt 222 durch den Gatekeeper 125 erfolgen. Dabei kann der Gatekeeper 125 zum Beispiel kontinuierlich, also nach dem Empfangen jedes Datenpakets einer Mehrzahl von Datenpaketen, in die die neue Software 350 zur Übertragung aufgeteilt ist, den Hash-Wert berechnen. Alternativ oder zusätzlich kann der Gatekeeper 125 den Hash-Wert der neuen Software 350 auch (erst) nach dem Empfangen aller Datenpakete durchführen.

In einem Schritt 224 kann die neue Software 350 an die Steuereinheit 122 übermittelt oder weitergeleitet werden, wobei die Steuereinheit 122 in Schritt 230 die neue Software 350 in den dedizierten Speicherbereich schreibt. Selbstverständlich kann der Schritt 230, also der eigentliche Schreibprozess in den Speicher 130 (zum Beispiel ein Flashen (Überschreiben) des Speichers 130) auch von dem Gatekeeper 125 durchgeführt werden. Mit anderen Worten wird die neue Software 350 durch den Gatekeeper 125 durchgeleitet, wobei der Gatekeeper 125 während der Durchleitung die Hash-Wertberechnung durchführt.

Bei der kontinuierlichen Berechnung des Hash-Werts durch den Gatekeeper 125 kann jedes Datenpaket in dem Schritt 224 zur Speicherung in dem dedizierten Speicherbereich an den Speicher 130 übermittelt werden. Dadurch wird das Übertragen der neuen Software 350 in den dedizierten Speicherbereich beschleunigt, da nicht erst das Herunterladen der neuen Software 350 in den Gatekeeper 125 und anschließendes Übertragen der vollständigen neuen Software 350 zu dem dedizierten Speicherbereich abgewartet werden muss. Insbesondere bei in Haushaltsgeräten 100 üblichen Bussystemen kann eine Datenübertragungsrate gering sein, so dass durch dieses "direkte Durchschleusen" Zeit eingespart werden kann.

Selbstverständlich kann der dedizierte Speicherbereich auch in einem anderen Speichermedium als dem in Figur 1 dargestellten Speicher 130 eingerichtet sein. Der dedizierte Speicherbereich dient der Ablage der neuen Software 350, um eine Komponente 110 zu steuern oder deren Funktionalität auszuführen.

In dem Schritt 240 wird die Signatur der neuen Software 350 überprüft, wie dies in Bezug auf Figur 2 bereits beschrieben wurde. In der Implementierungsvariante gemäß Figur 3 wird dies durch den Gatekeeper 125 durchgeführt. Somit kann die Steuereinheit 122 von den Aufgaben, die in den Schritten 222 und 240 durchgeführt werden, entbunden werden, wodurch die Steuereinheit 122 einfacher gestaltet werden kann, oder es sich um eine herkömmliche/marktübliche Steuereinheit 122 handeln kann, die dann keiner weiteren Anpassung bedarf.

Auf jeden Fall wird die Signaturprüfung und somit die Integritätsprüfung der neuen Software 350 erst nach (und nicht vor) dem Schreiben der neuen Software in den dedizierten Speicherbereich durchgeführt. Dadurch kommt das Haushaltsgerät 100 für die Softwareaktualisierung ohne einen zusätzlichen Speicherbereich aus, der bei Haushaltsgeräten aus dem Stand der Technik nötig ist, um die neue Version der Software zunächst zwischenzuspeichern und vorab zu validieren, bevor sie in den für die Software vorgesehenen dedizierten Speicherbereich geschrieben wird.

Nach erfolgter Signaturprüfung kann in Schritt 250 der Prüfwert (z.B. Indikator oder Flag) auf gültig gesetzt werden. Auch dieser Schritt 250 kann durch den Gatekeeper 125 ausgeführt werden. Wird in der Signaturprüfung eine Integritätsverletzung der neuen Software 350 nachgewiesen (mittels unterschiedlicher Hash-Werte, zum Beispiel durch korrupte oder fehlende Datenpakete), kann in Schritt 255 der Prüfwert (z.B. Indikator oder Flag) auf ungültig gesetzt werden oder unverändert belassen werden, sofern er/es in Schritt 210 auf ungültig gesetzt wurde.

Ferner kann der Gatekeeper 125 die Schritte 222, 224 und 240 auch für eine Mehrzahl von Steuereinheiten 122 und/oder Komponenten 110 durchführen. Dadurch kann das Haushaltsgerät 100 mit einem Gatekeeper 125 ausgestattet sein oder nachgerüstet werden, wobei sämtliche nachgelagerten Komponenten oder Baueinheiten des Haushaltsgerät 100, wie zum Beispiel die Steuereinheit 122 und/oder Komponente(n) 110, durch den Gatekeeper 125 mit neuer Software 350 beschrieben werden können.

Ferner könnte die neue Software 350 auch komprimiert veröffentlicht werden, wodurch eine Übertragung auf das Haushaltsgerät 100 erleichtert wird. Ein Dekomprimieren der neuen Software 350 könnte in der Kommunikationseinheit 140 erfolgen, die üblicherweise über eine größere Prozessorleistung als das Steuersystem 120 und/oder die Komponenten 110 verfügt. Alternativ kann ein Dekomprimieren der neuen Software 350 auch durch den Gatekeeper 125 erfolgen. Die oben beschriebene Signaturprüfung kann dabei insbesondere durchgeführt werden, wenn die komprimierte Datei mit der neuen Software 350 zuvor verschlüsselt wurde.

## Patentansprüche

1. Haushaltsgerät (100), umfassend:
ein Steuersystem (120), das dazu eingerichtet ist, eine Komponente (110) des Haushaltsgeräts zu steuern;
einen Speicher (130), der einen dedizierten Speicherbereich zur Speicherung von Software, die von dem Steuersystem (120) ausführbar ist, umfasst; und
eine Kommunikationseinheit (140), die dazu eingerichtet ist, das Haushaltsgerät (100) mit einem Datennetzwerk (200) zu verbinden,
**dadurch gekennzeichnet,**
**dass** das Steuersystem (120) ferner dazu eingerichtet ist:
eine neue Version der Software (350) von der Kommunikationseinheit (140) zu empfangen,
die empfangene Software (350) in den dedizierten Speicherbereich zu schreiben,
eine Signatur der empfangenen Software unter Verwendung eines öffentlichen Schlüssels (145) zu prüfen, und
einen Prüfwert in dem Steuersystem (120) zu setzen, der anzeigt, ob die Prüfung der Signatur erfolgreich ist oder nicht, und
**dass** das Steuersystem (120) umfasst:
eine Steuereinheit (122), die dazu eingerichtet ist, das Schreiben der empfangenen Software in den dedizierten Speicherbereich durchzuführen; und
einen Gatekeeper (125), der dazu eingerichtet ist:
die neue Version der Software (350) von der Kommunikationseinheit (140) zu empfangen und an die Steuereinheit (122) zu übertragen, und
das Prüfen der Signatur unter Verwendung des öffentlichen Schlüssels (145) durchzuführen.

2. Haushaltsgerät (100) gemäß Anspruch 1, wobei das Steuersystem (120) ferner dazu eingerichtet ist:
vor oder während des Empfangens der neuen Software (350) den dedizierten Speicherbereich zu löschen.

3. Haushaltsgerät (100) gemäß Anspruch 1 oder 2, wobei die neue Version der Software in Form einer Mehrzahl von Datenpaketen empfangen wird, und
wobei der Gatekeeper (125) ferner dazu eingerichtet ist:
einen Hash-Wert der empfangenen Software (350) kontinuierlich nach dem Empfangen jedes Datenpakets zu berechnen, und
das Prüfen der Signatur kontinuierlich nach dem Empfangen jedes Datenpakets oder nach dem Empfangen aller Datenpakete durchzuführen.

4. Haushaltsgerät (100) gemäß einem der Ansprüche 1 bis 3 , wobei der Gatekeeper (125) ferner dazu eingerichtet ist, den Prüfwert zu setzen.

5. Haushaltsgerät (100) gemäß einem der Ansprüche 1 bis 4, wobei der Gatekeeper (125) ferner dazu eingerichtet ist, mit einer Mehrzahl von Steuereinheiten (122) zu kommunizieren, wobei jede Steuereinheit (122) mindestens einer bestimmten Komponente (110) des Haushaltsgeräts (100) zugeordnet ist.

6. Haushaltsgerät (100) gemäß einem der Ansprüche 1 bis 5, wobei der Gatekeeper (125) mit der Kommunikationseinheit (140) eine Einheit bildet.

7. Haushaltsgerät (100) gemäß einem der Ansprüche 1 bis 6, wobei der Gatekeeper (125) über eine Datenübertragungsleitung an die Steuereinheit (122) angebunden ist, die separiert ist von der Verbindung des Gatekeepers (125) zu dem Datennetzwerk (200),
wobei vorzugsweise der Gatekeeper (125) mit der Steuereinheit (122) über einen internen Bus (160) verbunden ist.

8. Haushaltsgeräte (100) gemäß einem der Ansprüche 1 bis 7, wobei die Kommunikationseinheit (140) dazu eingerichtet ist, das Steuersystem (120) von dem Datennetzwerk (200) zu trennen.

9. Haushaltsgerät (100) gemäß einem der Ansprüche 1 bis 8, wobei das Steuersystem (120) ferner dazu eingerichtet ist, die Software auszuführen, wenn der Prüfwert anzeigt, dass eine gültige Software (350) vorliegt.

10. Verfahren zum Aktualisieren einer Steuersoftware für ein Haushaltsgerät (100) mit einem Speicher, der einen dedizierten Speicherbereich zur Speicherung der Steuersoftware umfasst, wobei das Verfahren umfasst:
Empfangen (220) einer neuen Version der Steuersoftware (350);
Schreiben (230) der empfangenen Steuersoftware in den dedizierten Speicherbereich;
Prüfen (240) einer Signatur der empfangenen Steuersoftware unter Verwendung eines öffentlichen Schlüssels (145); und
Setzen (250) eines Prüfwerts, der anzeigt, ob die Prüfung der Signatur erfolgreich ist oder nicht.

11. Verfahren gemäß Anspruch 10, wobei das Empfangen (220) der neuen Version der Steuersoftware auf Basis einer Mehrzahl von Datenpaketen erfolgt, und das Verfahren ferner umfasst:
Berechnen (222) eines Hash-Werts der empfangenen Software (350) kontinuierlich nach einem Empfangen jedes Datenpakets,
wobei das Prüfen (240) der Signatur entweder kontinuierlich nach dem Empfangen jedes Datenpakets oder nach dem Empfangen aller Datenpakete erfolgt.
